# EUROPEAN PATENT APPLICATION

(11) **EP 4 566 971 A1**
(43) Date of publication of application: **11.06.2025**
(21) Application number: 24209740.0
(22) Date of filing: 30.10.2024
(51) Int. Cl.: B65G 17/24, B65G 21/20

(54) **CHAIN ROLLER**

(30) Priority: 04.12.2023 US 202318527807
(71) Applicant: Hilman, Incorporated, Marlboro, NJ 07746 (US)
(72) Inventor: FITCH, Darth, Jackson, 08527 (US)
(74) Representative: MERH-IP Matias Erny Reichl Hoffmann Patentanwälte PartG mbB

(57) **Abstract**

A chain roller includes an exterior frame, a roller chain assembly configured to circulate in a loop in the exterior frame and a load-bearing member in the loop and the frame. The load-bearing member includes (1) a first portion (a) affixed to the frame and (b) including a recess and (2) a removable rigid insert that is received in the recess and removably attached to the first portion. The roller chain assembly engages the removable rigid insert to propel the chain roller.

## Description

### FIELD OF THE INVENTION

This invention relates to chain rollers or load skates that are capable of supporting and transporting heavy objects. More specifically, this invention relates to the internal load-bearing members of those chain rollers or load skates.

### BACKGROUND OF THE INVENTION

Chain rollers or load skates are used to support and transport heavy objects in various environments, including manufacturing plants, repair facilities, goods transfer stations and facilities, and even on board ships. Such chain rollers or load skates typically consist of (a) an exterior frame, on which the objects are placed, (b) a continuous roller chain assembly (1) supported in the exterior frame such that the continuous roller chain assembly circulates in a closed loop and (2) that includes a plurality of rollers connected in series to form a continuous chain of the rollers, and (c) a load-bearing member (1) in the loop of the continuous roller chain assembly, (2) that engages the individual rollers of the continuous roller chain assembly as the roller chain assembly circulates in its loop and (3) coupled to and located within the exterior frame. A portion of the continuous roller chain assembly extends below the exterior frame.

One common use of the chain rollers or load skates is to place the chain rollers or load skates on a floor or ground surface such that rollers of the portion of the continuous roller chain assembly that extends below the external frame engage and are supported by the floor or ground surface. Those rollers also engage the underside surface of the load-bearing member that is inside the loop of the continuous roller chain assembly. Stated differently, those rollers are "sandwiched" between the floor or ground surface and the underside surface of the load-bearing member.

When a sufficient force is applied on the chain rollers or load skates (or on an object carried by the chain rollers or load skates) in a longitudinal direction of the loop, *i.e.*, a direction perpendicular to the axes of the individual rollers and substantially parallel to the floor or ground surface, the engagement of the rollers "sandwiched" between the floor or ground surface and the underside surface of the load-bearing member with the floor or ground surface causes those rollers to rotate. The simultaneous engagement of those rollers with the underside surface of the load-bearing member causes the chain rollers or load skates to move in the direction of the force when those rollers rotate.

Due to the heavy weight of the objects being transported, equipment used to support and transport the objects, including chain rollers or load skates, is subject to a high degree of deterioration and wear. Accordingly, it is desirable that such equipment be designed such that components with high wear surfaces can be readily and relatively quickly replaced to minimize the "down time" of such equipment and to encourage timely replacement of those components. In chain rollers or load skates, those high wear surfaces include the underside surface of the internal load-bearing member.

Specifically, the load on the underside surface of the load-bearing member, due to that surface's engagement with the rollers that are also in engagement with the floor or ground surface, is large, which causes wear and tear of that surface. Thus, that surface should be sufficiently rigid and strong to resist that wear and tear. In addition, as discussed above, it is desirable that the component of the load-bearing member that includes that underside surface be readily replaceable to minimize the "down time" of the chain roller or load skate and to encourage timely replacement of the component.

### SUMMARY OF THE INVENTION

The chain rollers or load skates of this invention address the above needs with regard to chain rollers or load skates and other needs that are apparent to those skilled in the art given this disclosure.

Specifically, the chain rollers or load skates of some embodiments of this invention include (a) an exterior frame, (b) a roller chain assembly (1) including a plurality of rotatable and cylindrical rollers that are interconnected in a continuous series to form a closed chain and (2) configured to circulate in a loop in the exterior frame and (c) a load-bearing member (1) in the loop and the exterior frame, (2) fixed to the exterior frame and (3) including (i) a first rigid portion affixed to the frame and having a recess and (ii) a removable rigid insert. The removable rigid insert may be received in the recess and may be removably and directly attachable to the first rigid portion. A surface of the removable rigid insert may abut a surface of the recess. The roller chain assembly and the load-bearing member may be configured such that the rotatable and cylindrical rollers engage the removable rigid insert to cause movement of the chain roller.

In certain embodiments of the invention, the removable rigid insert is a rigid plate and the rotatable and cylindrical rollers engage one surface of the rigid plate when the removable rigid insert is attached to the first rigid portion.

In other embodiments of this invention, the rotatable and cylindrical rollers also engage a surface of the first rigid portion opposite to the one surface of the rigid plate.

In yet another embodiments of this invention, the recess is in a bottom surface of the first rigid portion and may have a bottom wall and side walls. The side walls of the recess may be spaced inwardly from side walls of the first rigid portion. The removable rigid insert may also have walls facing and adjacent to the side walls.

In further embodiments of this invention, a top surface of the removable rigid insert abuts the bottom wall of the recess when the removable rigid insert is attached to the first rigid portion.

Advantages of this invention include that the replaceable rigid insert can be readily replaced when a wear surface of the insert becomes worn.

Other advantages, benefits and features of this invention will become apparent to those skilled in the art upon reading the detailed description of the invention.

### BRIEF DESCRIPTION OF THE DRAWINGS

Figure 1 is a top perspective view of a chain roller or load skate of one embodiment of this invention.
Figure 2 is an exploded, top perspective view of the chain roller or load skate illustrated in Figure 1.
Figure 3 is a side view of the chain roller or load skate illustrated in Figures 1 and 2.
Figure 4 is an end view of the chain roller or load skate illustrated in Figures 1-3.
Figure 5 is a bottom view of the chain roller or load skate illustrated in Figures 1-4.
Figure 6 is a cross sectional view along line 6-6 of Figure 4.
Figure 7 is a cross sectional view along line 7-7 of Figure 3.
Figure 8 is a bottom view of the load-bearing member of the chain roller or load skate illustrated in Figures 1-7, with the removable rigid insert removed.
Figure 9 is a partially exploded view of the roller chain assembly of the chain roller or load skate illustrated in Figures 1-8.
Figure 10 is a perspective view of the roller chain assembly and the load-bearing member of the chain roller or load skate illustrated in Figures 1-9.

### DETAILED DESCRIPTION OF THE DRAWINGS

One embodiment of this invention, chain roller or load skate 21, is illustrated in the figures. Chain roller or load skate 21 includes exterior frame 23, load-bearing member 27 attached to and in exterior frame 23, roller chain assembly 25 that forms a loop around load-bearing member 27, and brush assemblies 75.

### The Exterior Frame

In the embodiment of this invention illustrated in the figures, exterior frame 23 includes top plate 29 and side plates 31 and 33.

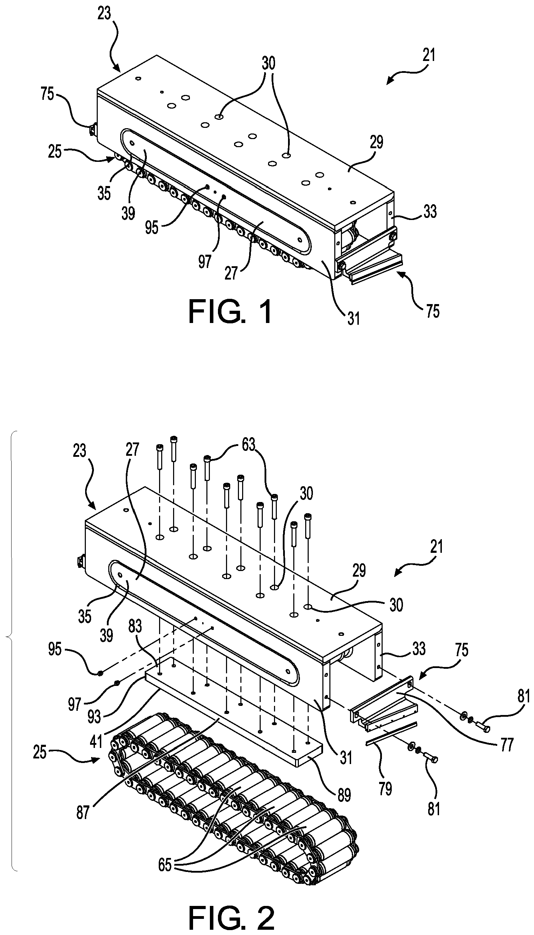

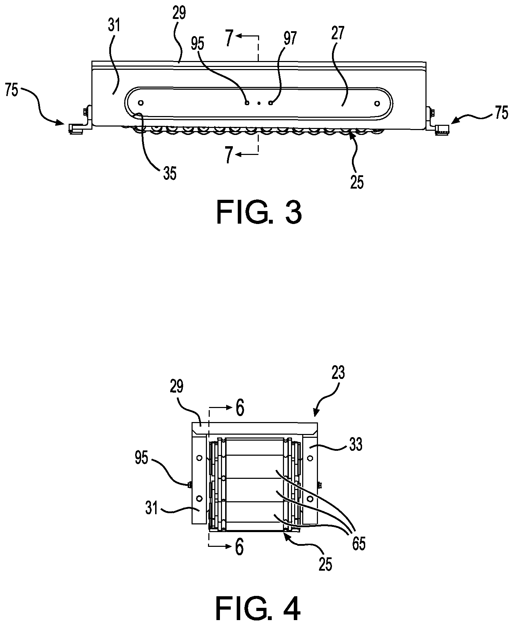

In this embodiment of the invention, top plate 29 and side plates 31 and 33 are rectangular plates. One longitudinal edge of each of side plates 31 and 33 is attached to the underside of top plate 29 such that side plates 31 and 33 and top plate 29 form a U-shape, as shown in Figures 1, 2 and 4, with side plates 31 and 33 being spaced and parallel. Side plates 31 and 33 may be attached to top plate 29 by screws, bolts and nuts, pins, welding or any other suitable fastening method.

Top plate 29 includes holes 30, which are described in more detail below.

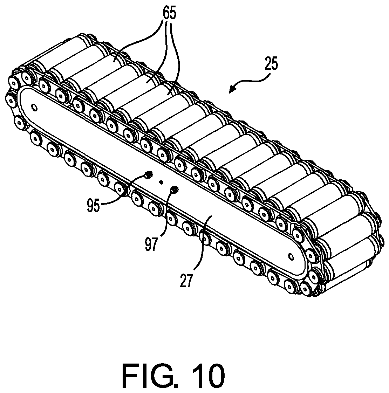

Side plate 31 includes aperture 35 and side plate 33 includes aperture 37. Apertures 35 and 37 receive and retain portions of main body 39 of load-bearing member 27, as illustrated in Figures 1-3 and 10. Main body 39 is discussed in more detail below.

While, in this embodiment of the invention, exterior frame 23 includes top plate 29 and side plates 31 and 33, any combination of plates and other rigid members, or a single unitary member, can be the exterior frame of other embodiments of this invention as long as the plates, rigid members and/or single unitary member provide the structural strength and integrity to support the heavy loads to be supported and transported, the roller chain assembly and the load-bearing member. Also, the exterior frame does not have to have a U-shaped; the exterior frame can have other shapes.

### The Load-Bearing Member

Load-bearing member 27 is illustrated in Figures 1-3, 6-8 and 10 and includes main body (or first rigid portion) 39, removable rigid insert 41, screws 63, temperature sensor 95 and vibration sensor 97.

Main body 39 (1) has an oval shape when viewed from the side, as illustrated in Figures 2, 3 and 6, (2) is rigid and (3) includes bottom flat surface 43, top flat surface 45 and curved end surfaces 47 and 49.

In this embodiment of the invention, main body 39 is fixedly attached to side plates 31 and 33 by welding the portions of main body 39 received in apertures 35 and 37 to side plates 31 and 33, respectively. In other embodiments of this invention, the main body of the load-bearing member can be attached to the frame by any other suitable mechanical attachment apparatus or method or can be integral with the frame.

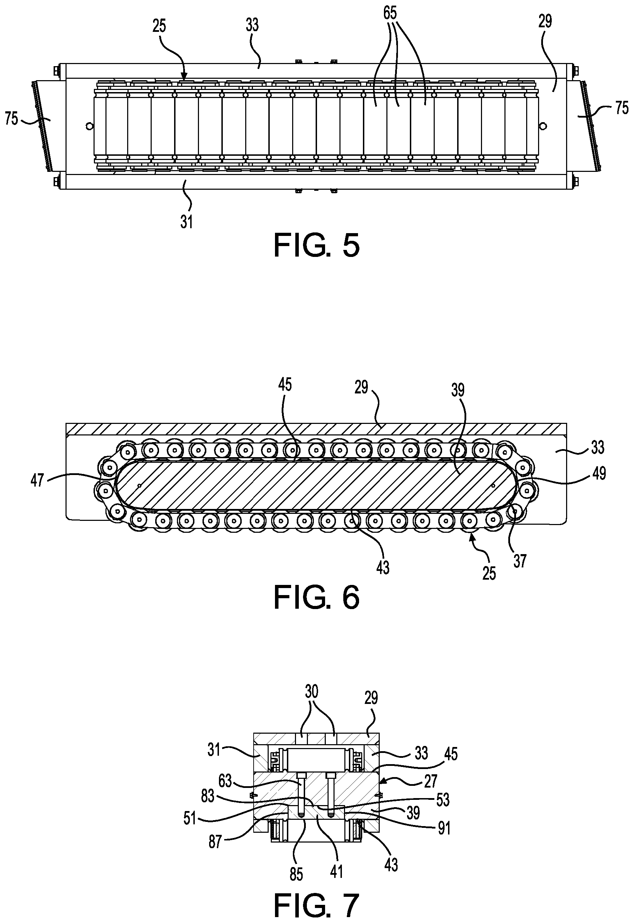

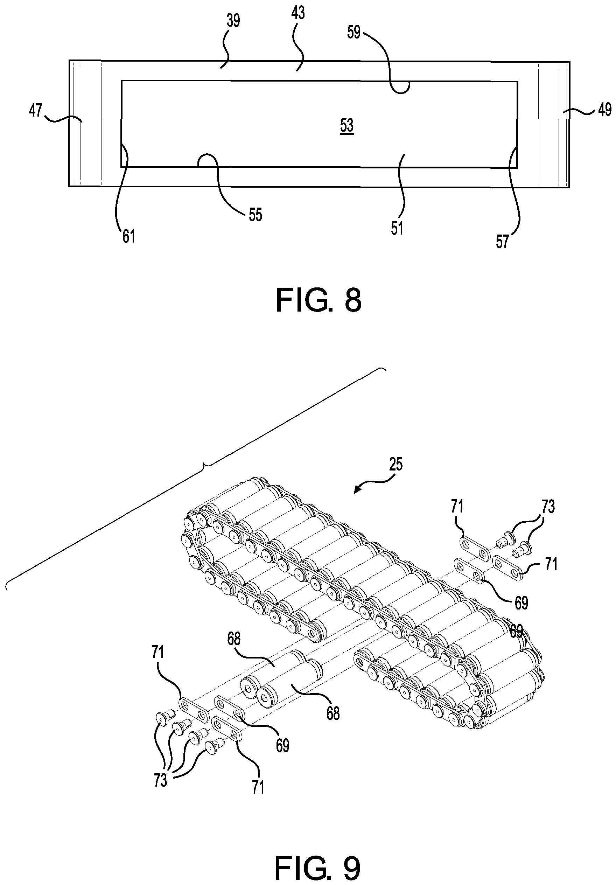

Bottom flat surface 43 includes recess 51, as illustrated in Figures 7 and 8. Recess 51 includes bottom surface 53, which, in this embodiment, is spaced inwardly from and parallel to bottom flat surface 43, and side walls 55, 57, 59 and 61. Side walls 55, 57, 59 and 61 are perpendicular to bottom flat surface 43 and bottom surface 53. Side walls 57 and 61 are spaced inward from the side edges of main body 39. Side walls 57 and 61 are spaced inward from curved end surfaces 47 and 49, respectively.

Removable rigid insert 41 is a rigid plate and is received within recess 51, as shown in Figure 7. Removable rigid insert 41 includes top surface 83, bottom surface 85 and side surfaces 87, 89, 91 and 93. In this embodiment of the invention, top surface 83 and bottom surface 85 are parallel and side surfaces 87, 89, 91 and 93 are perpendicular to top surface 83 and bottom surface 85.

Removable rigid insert 41 is directly attached to main body 39 in recess 51 by screws 63 such that top surface 83 of removable rigid insert 41 abuts bottom surface 53 of recess 51, side surface 87 of removable rigid insert 41 faces side wall 55 of recess 51, side surface 89 of removable rigid insert 41 faces side wall 57 of recess 51, side surface 91 of removable rigid insert 41 faces side wall 59 of recess 51, and side surface 93 of removable rigid insert 41 faces side wall 61 of recess 51. In this embodiment of the invention, bottom surface 85 of removable rigid insert 41 is in the same plane as bottom flat surface 43 of main body 39 when removable rigid insert 41 is attached to main body 39.

In this embodiment of the invention, temperature sensor 95 and vibration sensor 97 are embedded in main body 39, as illustrated in Figures 1-4. Specifically, in this embodiment, temperature sensor 95 and vibration sensor 97 are, essentially, threaded "plugs" that are received and retained in threaded bores in main body 39. In other embodiments of this invention, one or both of temperature sensor 95 and vibration sensor 97 can be embedded in or otherwise attached to the frame or other components of the chain roller or load skate.

While, in this embodiment of the invention, load-bearing member 27 is substantially rectangular and includes main body 39 and removable rigid insert 41, in other embodiments of this invention, the load-bearing member can have any shape and may be comprised of components other than main body 39 and removable rigid insert 41, as long as the load-bearing member is structurally sound and can perform the functions and has the capabilities of the load-bearing member described herein.

### The Roller Chain Assembly

Roller chain assembly 25 is illustrated in Figures 2, 5, 6, 9 and 10. In the embodiment of this invention illustrated in the figures, roller chain assembly 25 includes a plurality of rotatable and cylindrical individual rollers 68 that are parallel and interconnected in continuous series to form a closed chain of rollers 68.

Each of rollers 68 has an axis of rotation (see Figure 9), with all the axes of rotation being parallel. Rollers 68 may rotate in a clock-wise direction or a counterclockwise direction, depending on the direction of movement of roller chain assembly 25.

The individual rollers 68 are connected by inner links 69, outer links 71 and plugs 73 (see Figure 9). Plugs 73 connect inner links 69 and outer links 71 to rollers 68. There is a series of inner links 69 and outer links 71 on each of the two ends of rollers 68.

More specifically, each inner link 69 is connected to a pair of adjacent rollers 68 by plugs 73. Each outer link 71 is also connected to a pair of adjacent rollers 68 by plugs 73; however, the pair of adjacent rollers 68 that are attached to an inner link 69 is not the same as any pair of adjacent rollers 68 that are attached to an outer link 71. Rather, the pair of rollers 68 that is attached to an outer link 71 includes a roller 68 that is attached to one inner link 69 and an adjacent roller 68 that is attached to an adjacent inner link 69. As a result, rollers 68 are interconnected through inner links 69, outer links 71 and plugs 73.

While, in this embodiment of the invention, rollers 68 are connected by "chains" consisting of inner links 69 and outer links 71, in other embodiments of this invention, rollers 68 can be connected by any link assembly that permits movement of roller chain assembly 25 in the loop described herein. Moreover, while this embodiment has two "chains," a single "chain" may suffice in some embodiments.

### The Brush Assemblies

There is a brush assembly 75 at each end of chain roller or load skate 21. Each brush assembly 75 includes wiper block 77, brush wiper 79 and screws 81 that attach wiper block 77 to end surfaces of side plates 31 and 33. Brush wiper 79 can be attached to wiper block 77 by screws, adhesive, or any other connector that provides the required strength to retain brush wiper 79 connected to wiper block 77.

The function of brush wipers 79 is to clear debris from the path of chain roller or load skate 21 to reduce the risk of contamination and/or damage to roller chain assembly 25 by that debris.

### Assembly and Operation

Chain roller or load skate 21 is assembled as follows.

Main body 39 of load-bearing member 27 is attached to side plates 31 and 33 of exterior frame 23, as discussed above, either with or without removable rigid insert 41 being located in recess 51 in main body 39 and attached to main body 39 by screws 63. Top plate 29 of exterior frame 23 is then attached to side plates 31 and 33, as also discussed above.

If removable rigid insert 41 is not attached to main body 39 when main body 39 is attached to exterior frame 23, removable rigid insert 41 is next attached to main body 39 by passing screws 63 through holes 30 in top plate 29 and tightening screws 63 in removable rigid insert 41. Top surface 83 of removable rigid insert 41 abuts bottom wall 53 of recess 51.

Roller chain assembly 25 is then placed in a loop around load-bearing member 27, within exterior frame 23, as shown by Figures 6, 7 and 10. Specifically, at least one plug 73 is not in roller chain assembly 25, such that the assembly resembles a "belt." Roller chain assembly 25 is then placed around load-bearing member 27, and the missing plug(s) is/are inserted to form a closed chain around load-bearing member 27.

In this embodiment of the invention, rollers 68 of roller chain assembly 25 contact top flat surface 45 and curved end surfaces 47 and 49 of main body 39 and bottom surface 85 of removable rigid insert 41.

Brush assemblies 75 are attached to side plates 31 and 33, as discussed above, at any time during the assembly process.

Chain roller or load skate 21 can be utilized as follows.

Chain roller or load skate 21 is placed on a floor or ground surface with the portion of roller chain assembly 25 that extends below exterior frame 23 in contact with the floor or ground surface.

An object to be supported or transported is placed on top plate 29. If it is desired to transport the object by chain roller or load skate 21, a force is asserted on chain roller or load skate 21, or the object on top plate 29, in a longitudinal direction, *i.e*., a direction perpendicular to rollers 68 and substantially parallel to the floor or ground surface, to propel the chain roller or load skate 21 in that direction.

Specifically, because a portion of roller chain assembly 25 that extends below exterior frame 23 is "sandwiched" between the floor or ground surface and bottom surface 85 of removable rigid insert 41, a sufficient force on chain roller or load skate 21, or the object being carried by chain roller or load skate 21, in the longitudinal direction described above causes the rollers 68 in engagement with the floor or ground surface to rotate. Those rollers 68 are also in contact with the bottom surface 85 of removable rigid insert 41, such that, when those rollers 68 rotate, load-bearing member 27, and thus exterior frame 23, are propelled relative to the floor or ground surface in the longitudinal direction. Roller chain assembly 25 circulates in its "loop."

In addition to being used to transport an object, chain roller or load skate 21 can be used to support an object when the object is not being transported, *i.e*.,, when the object is stationary. For example, an object can be placed on chain roller or load skate 21, transported to a location where work or an operation is to be performed on or by the object, and support the object at that location.

Further, chain roller or load skate 21 can be used to support an object in an environment in which the support for the chain roller or load skate 21 and the object moves, such as a ship or a floating platform that sways or rocks due to waves, currents, wind, etc. For example, the object could be a crane on a ship or a floating platform. It may be desirable to maintain the crane in a set position vis-à-vis the body of water in which the ship or floating platform is located, *i.e.,* a set position independent of the motion of the ship or floating platform. Chain roller or load skate 21 can assist in the maintenance of the crane in the desired position vis-à-vis the body of water by permitting movement in the longitudinal direction to "compensate" for movement of the ship or floating platform in that direction due to, for example, waves, currents and wind.

The above descriptions of uses of chain roller or load skate 21 are of uses on substantially horizontal surfaces to transport or support an object on those surfaces.

However, chain roller or load skate 21 can also be used in an "inverted" position, with top plate 29 on a floor or ground surface and the exposed rollers 68 facing upward. In that "inverted" position, chain roller or load skate 21 can function, essentially, as a conveyor that transports objects in the longitudinal direction while chain roller or load skate 21 is stationary.

Further, the use of chain roller or load skate 21 is not limited to horizontal surfaces. Chain roller or load skate 21 can be used on inclined and even vertical surfaces.

In addition, the use of chain roller or load skate 21 is not limited to use on a flat surface. Chain roller or load skate 21 can also be used on rails, flat bars, I-beams, tubes, channels, etc.

During use, bottom surface 85 of removable rigid insert 41 may become worn due to the engagement of that surface with the rotating rollers 68. If the extent of that wear becomes unacceptable, a first removable rigid insert 41 in recess 51 of main body 39 can be readily replaced by a second removable rigid insert 41, as follows.

Chain roller assembly 25 is removed by removing one or more plugs 73 or, alternatively, by severing one or more of links 69 and 71. Screws 63 are removed through holes 30 in top plate 29. The first removable rigid insert 41 is removed from recess 51 of main body 39. A second removable rigid insert 41 is then inserted into recess 51 of main body 39. Screws 63 are then inserted through holes 30 and tightened to attach the second removable rigid insert 41 to main body 39. Chain roller assembly 25 is then re-installed around load-bearing member 27.

What is described and illustrated herein are preferred embodiments of the invention along with some variations. The terms, descriptions and figures herein are set forth by way of illustration only and are not meant as limitations. Those skilled in the art will recognize that many variations are possible within the spirit and scope of the invention, which is intended to be defined by the following claims -- and their equivalents -- in which all terms are meant to have their broadest reasonable definitions unless otherwise indicated.

## Claims

1. A chain roller comprising:
an exterior frame;
a roller chain assembly (i) including a plurality of rotatable and cylindrical rollers that are interconnected in a continuous series to form a closed chain and (ii) configured to circulate in a loop in the exterior frame, each of the plurality of rotatable and cylindrical rollers has an axis of rotation that is parallel to axes of rotation of all other of the plurality of rotatable and cylindrical rollers; and
a load-bearing member (i) in the loop and the exterior frame, (ii) affixed to the exterior frame and (iii) including (a) a first rigid portion affixed to the frame and having a recess and (b) a removable rigid insert, wherein:
the first rigid portion and the removable rigid insert are configured such that (i) the removable rigid insert fits in the recess, (ii) the removable rigid insert is removably and directly attachable to the first rigid portion and (iii) a removable rigid insert surface of the removable rigid insert abuts a surface of the recess when the removable rigid insert is attached to the first rigid portion; and
the roller chain assembly and the load-bearing member are configured such that the plurality of rotatable and cylindrical rollers engages the removable rigid insert to cause movement of the chain roller.

2. The chain roller according to claim 1, wherein:
the removable rigid insert is a rigid plate; and
the plurality of rotatable and cylindrical rollers engage one surface of the rigid plate when the removable rigid insert is attached to the first rigid portion.

3. The chain roller according to claim 2 wherein the plurality of rotatable and cylindrical roller engages a first surface of the first rigid portion opposite to the one surface of the rigid plate.

4. The chain roller according to claim 1, wherein three or more of the plurality of rotatable and cylindrical rollers are in contact with the removable rigid insert when the removable rigid insert is attached to the first rigid portion.

5. The chain roller according to claim 2, wherein:
the exterior frame has a load-bearing surface configured to bear a load; and
the one surface is opposite the load-bearing surface when the removable rigid insert is attached to the first rigid portion.

6. The chain roller according to claim 3, wherein the recess is in a second surface of the first rigid portion that is opposite the first surface.

7. The chain roller according to claim 1, wherein:
the recess has a bottom wall and side walls that define an opening;
the removable rigid insert has walls facing and adjacent to the side walls when the removable rigid insert is attached to the first rigid portion; and
the bottom wall is the surface of the recess that is abutted by the removable rigid insert surface when the removable rigid insert is attached to the first rigid portion.

8. The chain roller according to claim 7, wherein each the side walls of the recess are spaced inwardly from a corresponding sidewall of the first rigid portion.

9. The chain roller assembly according to claim 1, wherein:
the frame includes a plate configured to bear an object to be supported or transported;
the removable rigid insert is attachable to the first rigid portion by screws; and
the plate includes holes configured such that the screws pass through the holes to attach the removable rigid insert to the first rigid portion and detach the removable rigid insert from the first rigid portion.

10. The chain roller, according to claim 1, wherein the load-bearing member is configured such that the removable rigid insert surface abuts a bottom surface of the recess when the
removable rigid insert is attached to the first rigid portion.
